Europäisches Patentamt

European Patent Office

Office européen des brevets

(19)

(11) Veröffentlichungsnummer: **0 022 903**

**A1**

(12) # EUROPÄISCHE PATENTANMELDUNG

(21) Anmeldenummer: **80102262.5**

(22) Anmeldetag: **26.04.80**

(51) Int. Cl.³: **G 03 B 7/099**
**G 03 B 9/28**

(30) Priorität: **09.05.79 DE 2918647**

(43) Veröffentlichungstag der Anmeldung:
**28.01.81 Patentblatt 81/4**

(84) Benannte Vertragsstaaten:
**AT BE CH FR GB IT LI LU NL SE**

(71) Anmelder: **Rollei-Werke Franke & Heidecke GmbH + Co KG**
**Salzdahlumer Strasse 196**
**D-3300 Braunschweig(DE)**

(72) Erfinder: **Proske, Joachim**
**Am Hasengarten 41**
**D-3300 Braunschweig(DE)**

(74) Vertreter: **Pretzell, Hellmut, Dipl.-Ing.**
**Salzdahlumer Strasse 196**
**D-3300 Braunschweig(DE)**

(54) **Reflektierender Verschlussvorhang für fotografische Kameras und Verfahren zu seiner Herstellung.**

(57) Verschlußvorhang (8,9) mit reflektierenden kalottenförmigen Abschnitten (7,7'), die mit ihrer Hauptrückstrahlrichtung auf einen fotoelektrischen Wandler (6) gerichtet sind. Durch eine dichte Belegung der Abschnitte (7,7') auf den Verschlußvorhang wird erreicht, daß nahezu das gesamte Licht, das den Verschlußvorhang (7,7') trifft, auf einen fotoelektrischen Wandler (6) abgebildet wird und dadurch ein Maximum von Licht für eine exakte Lichtmessung ohne Streulicht erhält. Eine mittenbetonte Integralmessung ergibt sich durch entsprechend räumlich verteilte und auf den fotoelektrischen Wandler (6) ausgerichtete Abschnitte (7,7').

Die Herstellung der Abschnitte (7,7') erfolgt vorteilhaft durch Prägeverformung.

Fig. 2a

0022903

ROLLEI-WERKE
Franke & Heidecke
Braunschweig

07. Mai 1979

A 1152 EU

- 1 -

## Reflektierender Verschlußvorhang für fotografische Kameras und Verfahren zu seiner Herstellung

Die Erfindung betrifft einen reflektierenden Verschlußvorhang für fotografische Kameras und ein Verfahren zur Herstellung des Verschlußvorhangs.

Objektleuchtdichtemessungen durch das Objektiv einer fotografischen Kamera zur Bestimmung exakter Belichtungsdaten sind nach heute bekannten Methoden soweit entwickelt, daß der Meßvorgang nach Auslösung z. B. einer Spiegelreflexkamera oder bei hochgeklapptem Spiegel nicht unterbrochen wird, oder mit dem Hochklappen des Spiegels erst beginnt.

Mit dem Gegenstand der DE-OS 27 31 684 ist vorgeschlagen worden, daß durch das Objektiv einfallende und nach Hochklappen des Spiegels vom Verschlußvorhang reflektierte Objektlicht einer im Spiegelkasten zwischen Spiegelrückseite und Verschluß angeordneten lichtempfindlichen Zelle zuzuführen und aus der Beleuchtungsstärke einen Belichtungswert für die Filmbelichtung abzuleiten. Um gegenüber einer glatten Oberfläche des Schlitzverschlusses zu einer gleichmäßigeren Bewertung des auf die Meßzelle gelangenden Objektlichts zu kommen, wurde die Oberfläche z. B. von metallischen Verschlußvorhängen durch Sandstrahlen aufgerauht. Dadurch wurde zwar erreicht, daß infolge diffuser Lichtreflexionen eine integrale Messung mit einer etwas besseren Bewertung erzielt wurde, als dies mit einer glatten Oberfläche des Verschlußvorhangs möglich war. Von der aufgerauhten Oberfläche des Verschlusses geht aber ein hoher Anteil an Strahlung des Objektlichts diffus in den Spiegelkastenraum und somit für die Messung verloren. Durch den diffus abgestrahlten und verlorengehenden Strahlenanteil wird ein Empfindlichkeitsverlust und gleichzeitig ein schlechter Wirkungsgrad bei der Messung hingenommen. Fehlerquellen bei der Auswertung einer solchen Messung und als Folge davon nicht optimal belichteter Bilder sind nicht auszuschließen.

Der Erfindung liegt daher die Aufgabe zugrunde, fotografische Kameras der eingangs genannten Art so zu verbessern, daß mit Hilfe der Reflexion des Lichts vom Verschlußvorhang eine mit großer Strahlungsintensität durchführbare blendenabhängige Teil- oder Vollintegralmessung und hinsichtlich des zur genauen Belichtungssteuerung auswertbaren Meßergebnisses ein hoher Wirkungsgrad erzielbar ist. Es soll möglichst das gesamte Licht, das den Verschlußvorhang trifft, auf dem fotoelektrischen Wandler abgebildet werden. Auch soll während der Verschlußauslösung beim Ablauf der Verschlußvorhänge Strahlungsintensität und Wirkungsgrad, d. h., der Anteil des zur Meßauswertung auf den fotoelektrischen Wandler auftreffenden Strahlungsanteils, nicht nennenswert absinken. Ferner soll die Verbesserung der Meßmethode ohne Mehrkosten für die Kamera realisierbar sein.

Diese Aufgabe wird erfindungsgemäß dadurch gelöst, daß auf der Oberfläche mindestens eines der Verschlußvorhänge reflektierende kalottenförmige Abschnitte vorgesehen sind, deren Hauptrückstrahlrichtung auf den fotoelektrischen Wandler gerichtet ist. Durch die Abbildung der Austrittspupille des Objektivs durch jeden einzelnen kalottenförmigen Abschnitt auf den fotoelektrischen Wandler erzielt man eine exakte Blendenabhängigkeit bei der Messung des auf den Verschlußvorhang fallenden Lichts. Gleichzeitig erhält man ein Maximum an Licht auf dem fotoelektrischen Wandler, da das sonst vorhandene Streulicht weitgehend ausgeschaltet ist.

Vorteilhafte Ausführungsformen der Erfindung werden dadurch erreicht, daß die reflektierenden kalottenförmigen Abschnitte auf den Verschlußvorhängen unterschiedlich große sphärische Flächen, unterschiedlich große Krümmungsradien und/oder eine unterschiedliche Neigung aufweisen. Dadurch kann der fotoelektrische Wandler an jeder beliebigen Stelle in der Kamera angeordnet werden.

In einer weiteren vorteilhaften Ausbildungsform der Erfindung sind zur Vermeidung einer unterschiedlichen Lichtbeaufschlagung des fotoelektrischen Wandlers durch die Bewegung des Verschlußvorhangs von der schlitzbildenden Vorderkante in Ablaufrichtung des Verschlußvorhangs gesehen die auf den fotoelektrischen Wandler ausgerichteten sphärischen Rückprojektionsflächen stetig kleiner werdend ausgebildet.

Schließlich ist in einer weiteren vorteilhaften Ausführungsform der Erfindung ein Teil der kalottenförmigen Abschnitte räumlich so verteilt und ausgerichtet, daß der fotoelektrische Wandler eine mittenbetonte Integralmessung vornimmt. Dabei kann beiderseits und in der Mitte der beiden schlitzbildenden Vorderkanten der Verschlußvorhänge eine gegenüber der allgemeinen quantitativen Flächenverteilung größere Dichte der kalottenförmigen Abschnitte vorgesehen sein. Durch diese Anordnung der kalottenförmigen Abschnitte erzielt man eine genauere Messung derjenigen Bildabschnitte, auf die es bei einem Normalbild ankommt.

Die Herstellung der kalottenförmigen Abschnitte auf den Verschlußvorhängen erfolgt in vorteilhafter Weise durch Prägeverformung.

Ein Ausführungsbeispiel der Erfindung ist in der Zeichnung dargestellt und wird im folgenden näher beschrieben.

Es zeigen

Fig. 1 eine vereinfachte Querschnittsansicht durch das optische System einer einäugigen Spiegelreflexkamera, wobei sich der Reflexspiegel in seiner unteren Stellung befindet;

Fig. 2a eine ähnliche Querschnittsansicht wie in Fig. 1 , wobei sich der Reflexspiegel in seiner oberen, angehobenen Stellung befindet und wobei das Licht, das den Verschlußvorhang trifft, auf einem fotoelektrischen Wandler abgebildet wird;

Fig. 2b eine Ansicht wie in Fig. 2a mit halbgeöffnetem Verschlußvorhang.

Fig. 3 die Draufsicht auf den in Fig. 2a geschlossen Verschlußvorhang mit unterschiedlich verteilten reflektierenden kalottenförmigen Abschnitten in vergrößerter Darstellung.

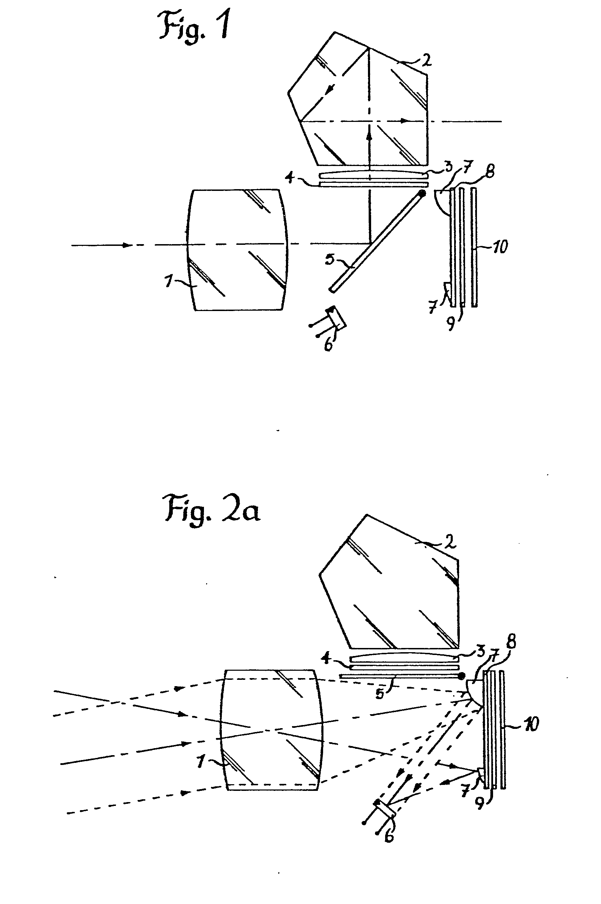

Fig. 1 zeigt eine vereinfachte, schematische Querschnittsansicht des optischen Systems einer einäugigen Spiegelreflexkamera, wobei ein lichtempfindliches Element in dem unteren Bereich des Spiegelkastens angeordnet ist, welcher der Filmebene zugewandt ist; bei dieser Darstellung befindet sich der Reflexspiegel in seiner unteren, abgesenkten Stellung.

Der durch ein Objektiv 1 hindurchtretende Objektivstrahlengang wird im rechten Winkel durch einen Spiegel 5 nach oben reflektiert und erreicht durch eine Einstellscheibe 4, eine Feldlinse 3 und ein Pentaprisma 2 und einem nicht dargestellten Okular schließlich das Auge des Fotografen. Weiterhin befindet sich im Spiegelkasten unter dem Spiegel 5 ein fotoelektrischer Wandler 6, der auf einem vorderen bzw. hinteren Verschlußvorhang 8 bzw. 9 ausgerichtet ist. Hinter den Verschlußvorhängen 8, 9 ist ein Film 10, auf dem Einzelbilder aufgenommen werden sollen, angeordnet. Auf dem vorderen Verschlußvorhang 8 sind mit 7, 7' reflektierende kalottenförmige Abschnitte schematisch dargestellt.

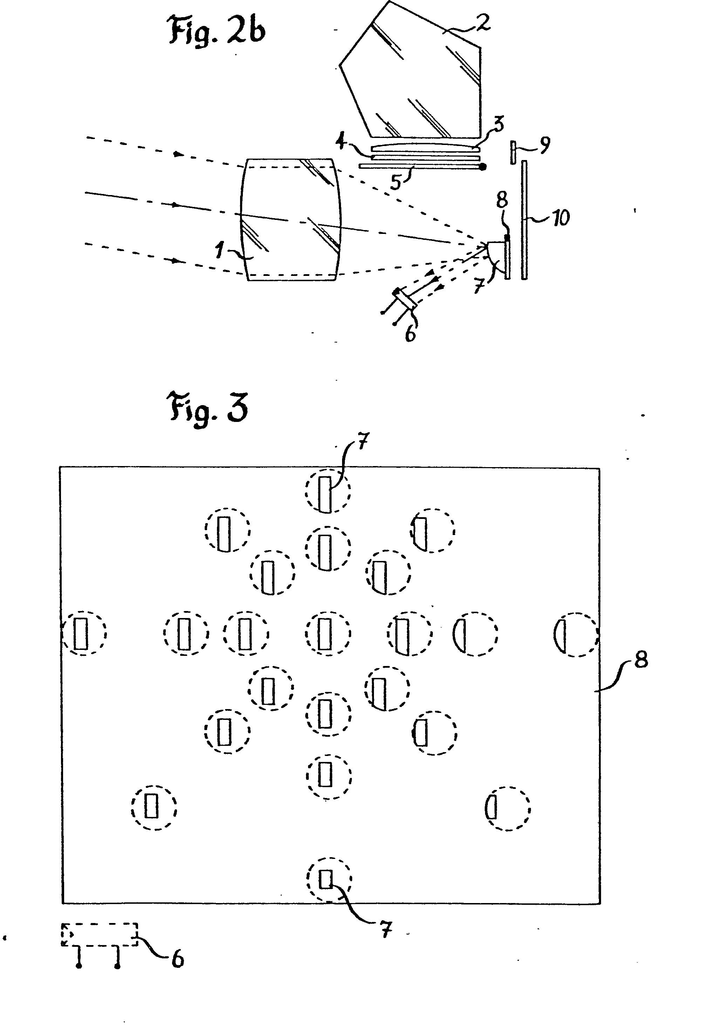

Bei der entsprechenden Ansicht nach Fig. 2 befindet sich der Spiegel 5 in seiner hochgeklappten Stellung, in der eine Belichtung durchgeführt werden soll. Der reflektierende kalottenförmige Abschnitt 7' bildet die Austrittspupille des Objektivs 1 (gestrichelt dargestellter Strahlengang) auf dem fotoelektrischen Wandler 6 ab. Das gleiche gilt für den kalottenförmigen Abschnitt 7, der aufgrund seiner Lage im unteren Bereich des vorderen Verschlußvorhangs 8 eine reflektierende Fläche mit einer geringeren Neigung gegenüber dem fotoelektrischen Wandler aufweist. Aus Übersichtslichkeitsgründen ist die von diesem kalottenförmigen Abschnitt 7 auf dem fotoelektrischen Wandler 6 abgebildete Austrittspupille des Objektivs 1 nicht als Strahlengang eingezeichnet. Es wurde lediglich der Mittelpunktstrahl eingezeichnet. Derartige reflektierende kalottenförmige Abschnitte 7, 7' (hier übertrieben groß dargestellt) befinden sich in mit dem bloßen Auge kaum wahrnehmbarer Größe mit unterschiedlicher Neigung ihrer sphärischen Reflexionsflächen über den gesamten Verschlußvorhang 8 bzw. 9 verteilt.

Mit einer derartigen Anordnung wird erreicht, daß soviel durch das Objektiv 1 hindurchtretendes Licht wie möglich ohne Streuverluste auf den fotoelektrischen Wandler 6 trifft. Es ergibt sich eine Belichtungsmessung, die blendenabhängig genau den Bereich mißt, der für die Belichtung des Films 10 wichtig ist.

Damit auch bei einem sich von oben nach unten bewegenden, Verschlußvorhang 8 (Fig. 2b) weiterhin das durch das Objektiv 1 hindurchtretende Licht auf den fotoelektrischen Wandler 6 abgebildet wird, ist z. B. der kalottenförmige Abschnitt 7' halbkugelförmig ausgebildet. Diese Ausbildung des kalottenförmigen Abschnitts 7 ist notwendig, da sich der Winkel, der vom fotoelektrischen Wandler 6, vom Verschlußvorhang 8 und vom Mittelpunkt des Objektivs 1 gebildet wird, ständig ändert. Die gleichen Verhältnisse treffen selbstverständlich auch bei dem hinteren Verschlußvorhang 9 zu. Durch diese Anordnung kann daher noch während des Ablaufs des vorderen Verschlußvorhangs 8 eine genaue Messung des durch das Objektiv 1 hindurchtretenden Lichts erfolgen.

In Fig. 3 ist der Verschlußvorhang 8 in Draufsicht vergrößert dargestellt. Die in den Fig. 1, 2a und 2b beispielsweise übertrieben groß dargestellten kalottenförmigen Abschnitte 7, 7' sind in dieser Ausführungsform der Erfindung flächenmäßig so verteilt, daß der fotoelektrische Wandler (gestrichelt dargestellt) eine mittenbetonte Integralmessung vornehmen kann. Im oberen Bereich des Verschlußvorhangs 8, in dem normalerweise der für die Belichtungsmessung wesentliche Teil des zu fotografierende Objekt abgebildet wird, ist eine Häufung der kalottenförmigen Abschnitte vorgesehen. Im unteren Bereich des Verschlußvorhangs 8 sind dagegen die Abschnitte mit Abstand voneinander angeordnet. Durch diese Anordnung erreicht man eine genaue Messung desjenigen Teils des zu fotografierenden Bildes, auf den es dem Fotografen ankommt.

Die in Fig. 3 dargestellte Teilintegralmessung kann durch eine entsprechende Anordnung der einzelnen kalottenförmigen Abschnitte selbstverständlich auch als Vollintegralmessung ausgebildet werden.

Je nach Verwendung der Kamera ist es so möglich, einen unterschiedlichen Bereich des zu fotografierenden Bildes durch eine unterschiedliche Anordnung der kalottenförmigen Abschnitte genauer zu messen. Die Erfindung ermöglicht es so, den Bewertungsbereich des fotoelektrischen Wandlers zu erweitern.

Die winzigen kalottenförmigen Abschnitte 7, 7' werden bei metallischen Verschlußlamellen vorzugsweise durch Prägeverformung ausgebildet. Diese Herstellung der Abschnitte hat den Vorteil, daß sie zusammen mit der Herstellung der Verschlußlamellen in einem Arbeitsgang kostengünstig ausgeformt werden können. Die Oberflächen dieser Prägeverformungen können anschließend veredelt oder verspiegelt werden.

Die Erfindung ist nicht auf die beschriebenen Ausführungsbeispiele beschränkt. So können z. B. die einzelnen Kugelkalottenabschnitte einzeln nachträglich, d. h., nach Herstellung des Verschlußvorhangs, aufgebracht werden.

Patentansprüche:

1. Fotografische Kamera mit Lichtmessung durch das Objektiv, insbesondere einäugige Spiegelreflexkamera mit einem Reflexspiegel in einem Spiegelkasten und einem hinter dem Spiegel vor dem Bildfenster angeordneten Schlitzverschluß, mit einem im Spiegelkasten angeordneten fotoelektrischen Wandler, der nach dem Hochklappen des Spiegels durch das Objektiv einfallendes und von der Oberfläche des Schlitzverschlusses reflextiertes Licht mißt, dadurch gekennzeichnet, daß auf der Oberfläche mindestens eines der Verschlußvorhänge (8, 9) reflektierende kalottenförmige Abschnitte (7, 7') vorgesehen sind, deren Hauptrückstrahlrichtung auf den fotoelektrischen Wandler (6) gerichtet ist.

2. Kamera nach Anspruch 1, dadurch gekennzeichnet, daß die reflektierenden kalottenförmigen Abschnitte (7, 7') auf den Verschlußvorhängen (8, 9) eine unterschiedlich große sphärische Fläche aufweisen.

3. Kamera nach Anspruch 2, dadurch gekennzeichnet, daß die reflektierenden kalottenförmigen Abschnitte (7, 7') auf den Verschlußvorhängen (8, 9) unterschiedlich große Krümmungsradien aufweisen.

4. Kamera nach Anspruch 3, dadurch gekennzeichnet, daß die reflektierenden kalottenförmigen Abschnitte (7, 7') auf den Verschlußvorhängen (8, 9) eine unterschiedliche Neigung aufweisen.

5. Kamera nach Anspruch 4, dadurch gekennzeichnet, daß von der schlitzbildenden Vorderkante in Ablaufrichtung des Verschlußvorhangs (8) gesehen die auf den fotoelektrischen Wandler ausgerichteten kalottenförmigen Abschnitte (7, 7') stetig kleiner werdend ausgebildet sind.

0022903

6. Kamera nach Anspruch 5, dadurch gekennzeichnet, daß ein Teil der kalottenförmigen Abschnitte (7, 7') räumlich so verteilt und ausgerichtet ist, daß der fotoelektrische Wandler (6) eine mittenbetonte Integralmessung vornimmt.

7. Kamera nach Anspruch 6, dadurch gekennzeichnet, daß beiderseits und in der Mitte der beiden schlitzbildenden Vorderkanten der Verschlußvorhänge (8, 9) eine gegenüber der allgemeinen quantitativen Flächenverteilung größere Dichte der kalottenförmigen Abschnitte (7, 7') vorgesehen ist.

8. Verfahren zur Herstellung eines Verschlußvorhangs für eine Kamera nach Anspruch 7, dadurch gekennzeichnet, daß die Formgebung der kalottenförmigen Abschnitte (7, 7') bei metallischen Verschlußlamellen durch Prägeverformung vorgenommen wird.

9. Verfahren zur Herstellung eines Verschlußvorhangs für eine Kamera nach Anspruch 8, dadurch gekennzeichnet, daß die durch Prägeverformung gebildeten kalottenförmigen Abschnitte (7, 7') oberflächenveredelt werden.

10. Verfahren zur Herstellung eines Verschlußvorhangs für eine Kamera nach Anspruch 8, dadurch gekennzeichnet, daß die durch Prägeverformung gebildeten kalottenförmigen Abschnitte (7, 7') an ihren Oberflächen verspiegelt werden.

Fig. 1

Fig. 2a

Fig. 2b

Fig. 3

Europäisches Patentamt

Nummer der Anmeldung

EP 80 10 2262.5

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 705 300 (E. LEITZ WETZLAR GMBH) <br> * Ansprüche 1, 8 bis 11; Seite 10, Absatz 3 * <br> -- | 1,6 |
| | DE - A - 2 226 904 (ROLLEI-WERKE FRANKE & HEIDECKE) <br> * Ansprüche 1, 2; Fig. 1, 2 * <br> -- | 1-4 <br> 6,7 |
| D | DE - A1 - 2 731 684 (ASAHI KOGAKU KOGYO) <br> -- | 1 |
| A | DE - B2 - 2 462 384 (OLYMPUS OPTICAL) <br> ---- | |

### KLASSIFIKATION DER ANMELDUNG (Int.Cl.)

G 03 B 7/099

G 03 B 9/28

### RECHERCHIERTE SACHGEBIETE (Int. Cl.)

G 03 B 7/00

G 03 B 9/00

G 03 B 19/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 13-10-1980 | HOPPE |

EPA form 1503.1 06.78